# EUROPÄISCHE PATENTSCHRIFT

(11) **EP 2 623 398 B1**
(45) Veröffentlichungstag und Bekanntmachung des Hinweises auf die Patenterteilung: **31.12.2014**
(21) Anmeldenummer: 13152076.9
(22) Anmeldetag: 21.01.2013
(51) Int. Cl.: B62D 15/02, G06K 9/00, G08G 1/16

(54) **Automatische Auswahl der Zielposition in einer Parklücke durch kombinierte Auswertung von Video / USS-Objekten**
Automatic selection of the target position in a parking space by means of combined evaluation of video/USS objects
Sélection automatique de la position cible d'un espace de stationnement par l'évaluation combinée d'objets vidéo / USS

(30) Priorität: 02.02.2012 DE 102012201495
(43) Veröffentlichungstag der Anmeldung: 07.08.2013
(73) Patentinhaber: ROBERT BOSCH GMBH, 70442 Stuttgart (DE)
(72) Erfinder: Pampus, Christian, 71229 Leonberg (DE); Irion, Albrecht, 70563 Stuttgart (DE); Niemz, Volker, 71277 Rutesheim (DE)

(56) Entgegenhaltungen:
- DE-A1-102005 008 876
- DE-A1-102005 027 642
- DE-A1-102008 027 779
- DE-A1-102009 040 373
- US-A1- 2010 045 448

## Beschreibung

Die vorliegende Erfindung betrifft ein Verfahren zum Festlegen einer Zielposition eines Fahrzeuges in einer Parklücke sowie ein Fahrerassistenzsystem zum Festlegen einer Zielposition eines Fahrzeuges in einer Parklücke.

### STAND DER TECHNIK

Moderne Fahrzeuge, insbesondere Personenkraftfahrzeuge, sind oftmals mit Einparksystemen ausgestattet. Durch diese Einparksysteme wird der Fahrer des Fahrzeuges bei einem Einparkvorgang unterstützt bzw. der Einparkvorgang wird durch das Einparksystem vollständig übernommen. Zur Berechnung der für den Einparkvorgang nötigen Einparktrajektorie ist es erforderlich, dass eine Zielposition des Fahrzeuges in der Parklücke im Vorfeld festgelegt worden ist. Basierend auf der aktuellen Position des Fahrzeuges und der festgelegten Zielposition können durch das Einparksystem die Parktrajektorie und die nötigen Lenkbewegungen und Beschleunigungen des Fahrzeuges berechnet werden, um die Parktrajektorie abzufahren und somit das Fahrzeug in die Parklücke einzuparken.

Ein derartiges Einparksystem ist beispielsweise aus der DE 10 2009 040 373 A1 bekannt. Die Festlegung der Zielposition wird gemäß dieser Schrift derart vorgenommen, dass die Parklücke begrenzende Objekte ermittelt werden. Die Zielposition wird derart gewählt, dass vorbestimmte Abstände des Fahrzeuges zu den die Parklücke begrenzenden Objekten eingehalten werden können. Ein ähnliches Einparksystem ist aus der DE 10 2005 027 642 A1 bekannt, welches sich von dem vorher erwähnten Einparksystem dahingehend unterscheidet, dass zusätzlich optional zu dem die Parklücke begrenzenden Objekten optional auch Fahrbahnmarkierungen zur Bestimmung der Zielposition herangezogen werden können.

Häufig wird insbesondere durch einen Parkplatzbetreiber eine Sollposition in einer Parklücke durch am Boden aufgebrachte Begrenzungslinien vorgegeben. Durch die aus dem Stand der Technik bekannten Einparksysteme, die sich bei der Festlegung der Zielposition des Fahrzeuges in der Parklücke primär an den Abständen zu dreidimensionalen Objekten orientieren, die die Parklücke begrenzen, kommt es daher oftmals zu einer Festlegung einer Zielposition, die von dieser Sollposition in der Parklücke deutlich abweicht. So ist es zum Beispiel möglich, dass, obwohl zum Beispiel eine Festlegung der Sollposition in der Parklücke als Zielposition möglich ist, wegen suboptimal geparkten Nachbarfahrzeugen eine ebenfalls von der Sollposition abweichende Zielposition für das einparkende Fahrzeug gewählt wird. Ferner ist eine Festlegung der Zielposition basierend allein auf den Begrenzungslinien nicht möglich.
Das US2010045448 A1 ist als nächstliegender Stand der Technik nach dem Oberbegriff des Anspruchs 1 zu sehen.

### OFFENBARUNG DER ERFINDUNG

Es ist daher Aufgabe der Erfindung, die voranstehend beschriebenen Nachteile bekannter Einparksysteme von Fahrzeugen zumindest teilweise zu beheben. Insbesondere ist es Aufgabe der vorliegenden Erfindung, ein Verfahren zum Festlegen einer Zielposition eines Fahrzeuges in einer Parklücke sowie ein Fahrerassistenzsystem zum Festlegen einer Zielposition eines Fahrzeuges in einer Parklücke bereitzustellen, welche in einfacher und kostengünstiger Weise eine Zielposition mit einer Parklücke derart bestimmt, dass eine durch die Begrenzungslinien vorgegebene Sollposition - wenn möglich - eingehalten wird.

Die voranstehende Aufgabe wird gelöst durch ein Verfahren mit den Merkmalen des unabhängigen Anspruchs 1 sowie durch ein Fahrerassistenzsystem mit den Merkmalen des unabhängigen Anspruchs 8. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Fahrerassistenzsystem und jeweils umgekehrt, so dass bezüglich der Offenbarung zu den einzelnen Erfindungsaspekten stets wechselseitig Bezug genommen wird bzw. werden kann.

In einem ersten Aspekt der Erfindung wird die Aufgabe durch ein Verfahren zum Festlegen einer Zielposition eines Fahrzeuges in einer Parklücke gelöst. Insbesondere wird das Verfahren dabei durch folgende Verfahrensschritte gekennzeichnet:
a) Bestimmung von zweidimensionalen Umgebungsparametern der Parklücke,
b) Bestimmung von dreidimensionalen Umgebungsparametern der Parklücke,
c) Erstellung einer Umweltkarte basierend auf den in den Schritten a) und b) ermittelten Umgebungsparametern der Parklücke,
d) Berechnung einer vorläufigen Zielposition des Fahrzeuges in der Parklücke basierend auf den zweidimensionalen Umgebungsparametern und
e) Korrektur der vorläufigen Zielposition des Fahrzeuges in der Parklücke basierend auf den dreidimensionalen Umgebungsparametern.

Durch die Bestimmung der zweidimensionalen Umgebungsparameter der Parklücke (s. Schritt a)), insbesondere der die Parklücke begrenzenden Linien (gemeint sind jegliche Art von Fahrbahnmarkierungen), wird die Parklücke derart erkannt, wie sie von einem Parkplatzbetreiber vorgesehen ist. Es kann sich bei der Parklücke dabei insbesondere sowohl um eine Längs- als auch um eine Querparklücke handeln. Grundsätzlich definieren diese Begrenzungslinien die Idealposition eines Fahrzeuges in der Parklücke. Diese ist dabei parallel bzw. orthogonal zu den Linien und mittig zwischen den Linien angeordnet. Vom Parkplatzbetreiber ist vorgesehen, dass alle von ihm vorgegebenen Parkplätze idealerweise auf ihren Sollpositionen besetzt sind. Die im zweiten Schritt b) durchgeführte Bestimmung von dreidimensionalen Umgebungsparametern der Parklücke ermöglicht eine Feststellung, ob diese Sollposition blockiert ist. Dreidimensionale Umgebungsparameter sind dabei insbesondere zum Beispiel feststehende Objekte wie Mauern, Mülltonnen oder Pflanzen, aber auch und insbesondere andere Fahrzeuge. Besonders andere Fahrzeuge können dabei derart abgestellt sein, dass sie eine Festlegung der Zielposition des Fahrzeuges auf der vom Parkplatzbetreiber vorgesehenen Sollposition verhindern. Die Abfolge der Schritte a) und b) kann dabei auch vertauscht sein. Aus den in den beiden ersten Schritten ermittelten Umgebungsparametern, sowohl den zweidimensionalen als auch den dreidimensionalen, wird in einem dritten Schritt c) des Verfahrens eine Umweltkarte erstellt. Diese Erstellung einer Umweltkarte basiert somit auf den ermittelten und bestimmten Umgebungsparametern, kann daher nur nach diesen Bestimmungen durchgeführt werden. Diese Umweltkarte beinhaltet somit sämtliche Informationen, die für eine Festlegung der Zielposition des Fahrzeuges in der Parklücke nötig sind. Durch die Umweltkarte wird die reale Umgebung der Parklücke virtuell sowie datentechnisch nachgebildet und dient als Basis der Berechnung der Zielposition des Fahrzeuges. In einem ersten weiteren Schritt wird eine vorläufige Zielposition des Fahrzeuges in der Parklücke derart berechnet, dass diese vorläufige Zielposition nur auf den zweidimensionalen Umgebungsparametern basiert. Diese vorläufige Zielposition entspricht dabei insbesondere der vom Parkplatzbetreiber vorgegebenen Sollposition eines parkenden Fahrzeuges in der Parklücke. Diese Sollposition kann jedoch von dreidimensionalen, die Parklücke begrenzenden, Objekten behindert sein. Um Kollisionen mit diesen dreidimensionalen Objekten, insbesondere anderen Fahrzeugen, zu verhindert, wird in einem letzten Schritt e) die vorläufige Zielposition des Fahrzeuges, die insbesondere der Sollposition des Fahrzeuges in der Parklücke entspricht, dahingehend korrigiert, dass das Fahrzeug sicher und kollisionsfrei in der Parklücke abgestellt werden kann. Dieser letzte Schritt kann natürlich entfallen, wenn keine Korrektur nötig ist. Dies ist insbesondere der Fall, wenn zum Beispiel nur zweidimensionale Umgebungsparameter vorhanden sind, wie zum Beispiel auf einem leeren Großraumparkplatz. Insgesamt stellt dies eine erhebliche Verbesserung der Zielposition des Fahrzeuges gegenüber einer Festlegung der Zielposition auf einer rein abstandsbasierten Bestimmung dar.

In einer Weiterentwicklung eines erfindungsgemäßen Verfahrens kann vorgesehen sein, dass im Schritt e) des Verfahrens zumindest eine Abstandsinformation berücksichtigt wird. Eine Abstandsinformation beinhaltet dabei insbesondere einen Mindestabstand, der zu dreidimensionalen Objekten eingehalten werden soll. Dieser Mindestabstand kann dabei sowohl von der Art der Parklücke als auch von der Position des dreidimensionalen Objektes zum Fahrzeug abhängen. So muss zum Beispiel in einer Querparklücke, in die vorwärts eingefahren wird, nach vorne nur wenig Abstand zu einem dreidimensionalen Objekt eingehalten werden. Zur Seite jedoch wird ein größerer Abstand benötigt, um das Aussteigen des Fahrers zu ermöglichen.

In einer bevorzugten Weiterentwicklung eines erfindungsgemäßen Verfahrens kann ferner vorgesehen sein, dass als zumindest eine Abstandsinformation ein Aussteigeabstand und/oder ein Rangierabstand berücksichtig werden. Der Aussteigeabstand kann dabei zum Beispiel auf der Fahrer- und/oder auf der Fahrer- und Beifahrerseite berücksichtig werden. Hierbei kann insbesondere zum Beispiel auch eine Sitzplatzbelegung im Fahrzeug ausgewertet und für die Bestimmung des nötigen Aussteigeabstandes herangezogen werden. Insbesondere in Querparklücken, die links und rechts vom Fahrzeug durch dreidimensionale Objekte begrenzt sind, ist die Berücksichtigung eines Aussteigeabstandes von Vorteil. Durch die Berücksichtigung eines Rangierabstandes vor und/oder hinter dem Fahrzeug wird das Ausparken beim Verlassen der Parklücke erleichtert. Auch hier kann vorgesehen sein, dass zum Beispiel der Beladungszustand des Kofferraums in die Größe des Rangierabstandes mit einberechnet wird. So kann zum Beispiel bei einem beladenen Kofferraum ein größerer Rangierabstand eingestellt werden. Sämtliche Abstandsinformationen können natürlich auch vom Fahrer vorgegeben werden.

Ferner kann bei einem erfindungsgemäßen Verfahren vorgesehen sein, dass zur Bestimmung der zweidimensionalen Umgebungsparameter und/oder der Bestimmung der dreidimensionalen Umgebungsparameter Videosensoren und/oder Ultraschallsensoren verwendet werden. Durch Videosensoren, insbesondere durch Kameras, können insbesondere die zweidimensionalen Umgebungsparameter, insbesondere die Begrenzungslinien der Parklücke, bestimmt werden. Ultraschallsensoren stellen Standardsensoren zur Abstandsmessung und damit zur Erkennung von dreidimensionalen Umgebungsparametern der Parklücke dar. Selbstverständlich sind auch andere Sensorsysteme möglich, mit denen eine Bestimmung der zweidimensionalen und/oder dreidimensionalen Umgebungsparameter der Parklücke möglich ist. Ausschlaggebend für die Wahl der eingesetzten Sensoren sind dabei die umfassende Vermessung der Umgebung des Fahrzeuges und die eindeutige Möglichkeit der Bestimmung der zweidimensionalen und dreidimensionalen Umgebungsparameter der Parklücke.

Weiterhin kann bei einem erfindungsgemäßen Verfahren vorgesehen sein, dass in den Schritten d) und e) Vorschriften, insbesondere länderspezifische Vorschriften, berücksichtigt werden. Dies ist insbesondere dann von Vorteil, wenn man sich in einem Land befindet, in dem Bußgelder erhoben werden, wenn die vorgesehenen Parkflächen, das heißt insbesondere die Sollpositionen in den Parklücken, nicht eingehalten werden. In derartigen Ländern ist es sinnvoll, die zweidimensionalen Umgebungsparameter bei der Bestimmung der Zielposition noch weiter zu priorisieren. Dies kann insbesondere durch eine Verkleinerung der Mindestabstände, die zu dreidimensionalen Objekten eingehalten werden sollen, erreicht werden. Die Information, in welchem Land sich das Fahrzeug befindet, kann dabei zum Beispiel durch den Fahrer eingegeben werden, aber auch über eine Auswertung eines Navigationsgerätes oder eines GPS-Empfängers erfolgen. Auch kann das spezifische Land bereits in der Bordelektronik des Fahrzeuges hinterlegt sein.

Ferner kann bei einem erfindungsgemäßen Verfahren vorgesehen sein, dass die Schritte a) und b) und/oder die Schritte d) und e) kombiniert ausgeführt werden. Kombiniert im Sinne der Erfindung bedeutet dabei insbesondere simultan bzw. gleichzeitig. Dadurch wird eine deutliche Zeitersparnis erreicht. In den Schritten a) und b) kann dies beispielsweise durch eine gleichzeitige Ansteuerung bzw. Auslese der Detektoren bzw. Sensoren erreicht werden. Bei einer kombinierten Ausführung der Schritte d) und e) muss dabei jedoch gewährleistet bleiben, dass die zweidimensionalen Umgebungsparameter bei der Festlegung der Zielposition des Fahrzeuges in der Parklücke Vorrang vor den dreidimensionalen Umgebungsparametern haben.

In einer besonders bevorzugten Weiterentwicklung eines erfindungsgemäßen Verfahrens kann es vorgesehen sein, dass durch das Verfahren eine Zielposition des Fahrzeuges in einer Längsparklücke und/oder einer Querparklücke festgelegt wird. Die Anwendbarkeit des Verfahrens ist nicht auf eine Form einer Parklücke festgelegt. Ausschlaggebend für die Anwendbarkeit des Verfahrens ist lediglich das Vorhandensein von zweidimensionalen Begrenzungslinien, die die durch den Parkplatzbetreiber vorgegebene Sollposition festlegen. Auch eine Anwendung des Verfahrens zum Bespiel auf Schrägparklücken ist denkbar.

Gemäß einem zweiten Aspekt der Erfindung wird die Aufgabe durch ein Fahrerassistenzsystem zum Festlegen einer Zielposition eines Fahrzeuges in einer Parklücke, aufweisend eine Sensoranordnung und eine Auswertevorrichtung, wobei die Sensoranordnung zweidimensionale und dreidimensionale Umgebungsparameter der Parklücke ermittelt und die Auswerteeinrichtung eine Umweltkarte basierend auf den ermittelten zweidimensionalen und dreidimensionalen Umgebungsparametern erstellt, gelöst. Insbesondere ist bei einem erfindungsgemäßen Fahrerassistenzsystem vorgesehen, dass die Auswertevorrichtung basierend auf den dreidimensionalen Umgebungsparametern eine vorläufige Zielposition berechnet und diese basierend auf den dreidimensionalen Umgebungsparametern korrigiert. Dadurch ist es möglich, eine durch einen Parkplatzbetreiber vorgesehene Sollposition in einer Parklücke, die durch die Begrenzungslinien festgelegt ist, gegenüber von Abstandsinformationen zu dreidimensionalen, die Parklücke begrenzenden, Objekten, zu priorisieren. Eine erhebliche Verbesserung der Festlegung der Zielposition gegenüber einer reinen abstandsbasierten Bestimmung kann so erreicht werden. Dies wird insbesondere dadurch erreicht, dass eine vorläufige Zielposition basierend rein auf den zweidimensionalen Umgebungsparametern, das heißt den die Parklücke begrenzenden Begrenzungslinien, ermittelt wird und diese nur dahingehend korrigiert wird, um eine Kollision mit dreidimensionalen Objekten in der Umgebung der Parklücke zu vermeiden. Selbstverständlich können auch verschiedene Abstandskriterien zu den dreidimensionalen Objekten berücksichtigt werden, insbesondere Rangier- und Aussteigeabstände. Das Fahrerassistenzsystem ist dabei nicht auf eine Art von Parklücken begrenzt sondern kann insbesondere auch bei Längs- und Querparklücken Anwendung finden.

Gemäß einer Weiterentwicklung eines erfindungsgemäßen Fahrerassistenzsystems kann vorgesehen sein, dass die Sensoranordnung Videosensoren und/oder Ultraschallsensoren umfasst. Bei der Wahl der Sensoren ist dabei insbesondere sicherzustellen, dass sowohl zweidimensionale Umgebungsparameter als auch dreidimensionale Umgebungsparameter der Parklücke bestimmbar sind. Insbesondere durch Videosensoren, wie zum Beispiel Kameras, können dabei die Begrenzungslinien der Parklücke bestimmt werden. Ultraschallsensoren sind gängige Sensoren, um Abstände zu und Positionen von die Parklücke begrenzenden dreidimensionalen Objekten zu bestimmen. Selbstverständlich sind auch andere Sensorsysteme, wie zum Beispiel Radarsensoren und/oder Lasersensoren denkbar.

Ferner kann gemäß einer Weiterentwicklung eines erfindungsgemäßen Fahrerassistenzsystems vorgesehen sein, dass das Fahrerassistenzsystem mit der Fahrzeugelektronik verbunden ist und/oder Daten mit der Fahrzeugelektronik austauscht. Diese Integration des Fahrerassistenzsystems in die Fahrzeugelektronik stellt eine Kostenersparnis dar, da insbesondere zum Beispiel die benötigten Sensoren auch für andere Zwecke eingesetzt werden können. So wird das erfindungsgemäße Fahrerassistenzsystem insbesondere bei einem Einparkvorgang eingesetzt. Bei einer Fahrt des Fahrzeuges können daher zum Beispiel die Sensoren, insbesondere die Abstandssensoren des Fahrerassistenzsystems, zum Beispiel für einen Spurwechselassistent oder Ähnliches eingesetzt werden. Durch einen Datenaustausch mit der Fahrzeugelektronik ist es zum Beispiel möglich, Daten eines Navigationsgerätes oder eines GPS Empfängers im Fahrerassistenzsystem zu nutzen.

In einer besonders bevorzugten Ausgestaltung eines erfindungsgemäßen Fahrerassistenzsystems kann vorgesehen sein, dass das Fahrerassistenzsystem zum Ausführen eines Verfahrens gemäß dem ersten Aspekt der Erfindung ausgestaltet ist. Sämtliche Vorteile, die zu einem Verfahren gemäß dem ersten Aspekt der Erfindung beschrieben worden sind, ergeben sich somit selbstverständlich auch für ein erfindungsgemäßes Fahrerassistenzsystem, das zur Ausführung eines derartigen Verfahrens ausgestaltet ist.

### BEVORZUGTE AUSFÜHRUNGSBEISPIELE

Das erfindungsgemäße Verfahren und seine Weiterbildungen sowie deren Vorteile und das erfindungsgemäße Fahrerassistenzsystem und seine Weiterbildungen sowie dessen Vorteile werden nachfolgend anhand von Zeichnungen näher erläutert. Es zeigen jeweils schematisch:
- Fig. 1: ein Fahrzeug in einer Zielposition, wie sie gemäß dem Stand der Technik gewählt wird,
- Fig. 2: ein Fahrzeug auf einer Sollposition in einem Parkplatz,
- Fig. 3a bis 3c: ein Fahrzeug auf gewählten Zielpositionen in einer Querparklücke und
- Fig. 4a bis 4c: ein Fahrzeug auf gewählten Zielpositionen in einer Längsparklücke.

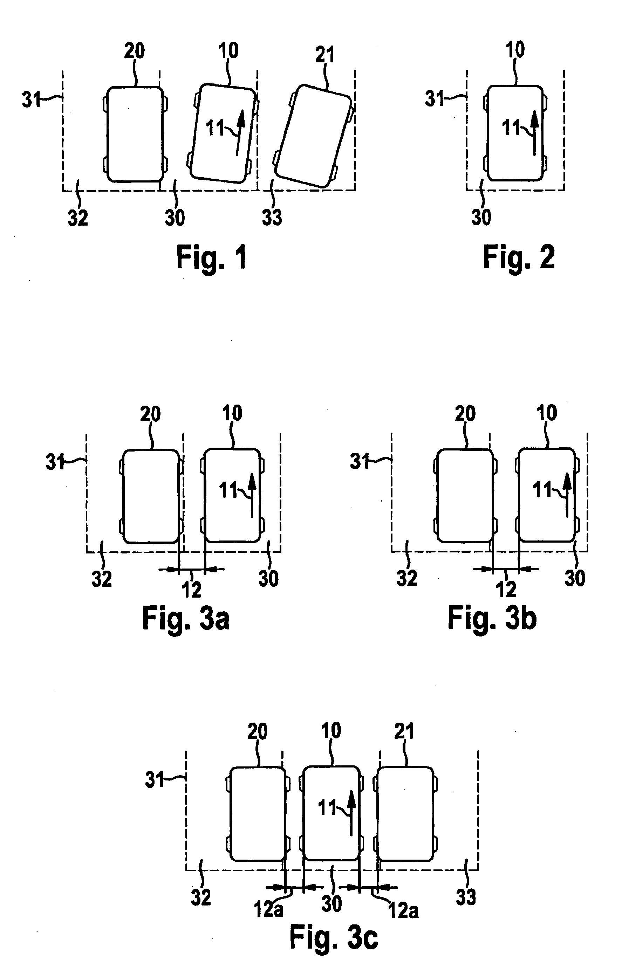

Elemente mit gleicher Funktion und Wirkungsweise sind in den Fig. 1, 2, 3a bis 3c und 4a bis 4c jeweils mit denselben Bezugszeichen versehen.

In Fig. 1 ist ein Fahrzeug 10 gezeigt, das in eine Parklücke 30 eingeparkt ist. Die Zielposition des Fahrzeuges 10 in der Parklücke 30 wurde dabei mit einem Parkassistenzsystem gemäß dem Stand der Technik festgelegt. Neben der Parklücke 30 befinden sich weitere Parklücken 32, 33, die links bzw. rechts neben der Parklücke 30 angeordnet sind. Es handelt sich bei allen gezeigten Parklücken 30, 32, 33 um Querparklücken. Die Parklücken 30, 32, 33 sind dabei durch Begrenzungslinien 31 sichtbar voneinander abgetrennt. In den angrenzenden Parklücken 32, 33 sind bereits weitere Fahrzeuge 20, 21 geparkt, die jedoch suboptimale Positionen in den jeweiligen Parklücken 32, 33 einnehmen. So ist das weitere Fahrzeug 20 in der Parklücke 32 derart weit rechts eingeparkt, dass es bereits auf der Begrenzungslinie 31, die zwischen der Parklücke 30 und 32 angeordnet ist, steht. Das weitere Fahrzeug 21 befindet sich zwar vollständig in der Parklücke 33, ist jedoch nicht parallel bzw. orthogonal zu den Begrenzungslinien 31 der Parklücke 33 orientiert. Das Fahrzeug 10, dessen Fahrtrichtung durch einen Pfeil 11 angedeutet ist, ist in die mittlere Parklücke 30 derart eingeparkt, dass nur die Abstände zu den benachbarten parkenden Fahrzeugen 20, 21 berücksichtigt worden sind. Dadurch ergibt sich für das Fahrzeug 10 eine ebenfalls nicht parallele Ausrichtung zu den Begrenzungslinien 31 der Parklücke 30 und einen deutlichen Versatz aus der Mitte der Parklücke 30. Somit hat das Parksystem gemäß dem Stand der Technik eine suboptimale Parkposition für das Fahrzeug 10 gewählt, aufgrund der ebenfalls suboptimal geparkten Nachbarfahrzeuge 20, 21.

Fig. 2 zeigt ein Fahrzeug 10, dessen Fahrtrichtung erneut mit einem Pfeil 11 angedeutet ist, das auf einer idealen Sollposition in einer Parklücke 30 geparkt ist. Die Parkposition des Fahrzeuges 10 ist dabei insbesondere parallel bzw. orthogonal zu den Begrenzungslinien 31 und mittig in der Parklücke 30. Diese Parkposition stellt auch die Sollposition dar, die vom Parkplatzbetreiber gewünscht ist.

In den Fig. 3a bis 3c sind Einparksituationen eines Fahrzeuges 10, das mit einem erfindungsgemäßen Fahrerassistenzsystem ausgestattet ist, in Querparklücken 30 gezeigt. Das Fahrzeug 10 weist daher insbesondere eine Sensoranordnung zur Bestimmung von zweidimensionalen und dreidimensionalen Umgebungsparametern der Parklücke 30 sowie eine Auswerteeinrichtung auf. In der Auswerteeinrichtung wird eine Umweltkarte basierend auf den ermittelten zweidimensionalen und dreidimensionalen Umgebungsparametern erstellt. Basierend auf dieser Umweltkarte wird die Zielposition des Fahrzeuges 10 in der Parklücke 30 bestimmt, wobei als erster Schritt eine vorläufige Zielposition basierend auf den zweidimensionalen Umgebungsparametern bestimmt wird und diese im Anschluss daran, falls nötig, aufgrund der dreidimensionalen Umgebungsparameter der Parklücke 30 korrigiert wird.

In Fig. 3a parkt das benachbarte Fahrzeug 20 in der Parklücke 32 recht nah an der Begrenzungslinie 31 zwischen den Parklücken 30 und 32. Der Aussteigeabstand 12, der zum Beispiel 70 cm beträgt, kann in diesem Fall jedoch eingehalten werden. Daher wird durch das Fahrerassistenzsystem des Fahrzeuges 10 die mittige Position des Fahrzeuges 10 in der Parklücke 30, die durch die Begrenzungslinien 31 vorgegeben ist, beibehalten. Hier wird die Priorisierung der zweidimensionalen vor den dreidimensionalen Umgebungsparametern deutlich. Eine rein abstandsbasierte Bestimmung der Zielposition in der Parklücke hätte einen Versatz des Fahrzeuges 10 aus der Mitte der Parklücke 30 zur Folge gehabt.

Fig. 3b zeigt eine Abwandlung des in Fig. 3a gezeigten Falles. Das angrenzend parkende Fahrzeug 20 parkt in der Parklücke 32 so weit rechts, dass es bereits über die Begrenzungslinie 31 hinausragt. Um den Aussteigeabstand 12 einzuhalten, wählt das erfindungsgemäße Fahrerassistenzsystem eine Zielposition des Fahrzeuges 10 derart, dass es aus der Mitte der Parklücke 30 versetzt ist. Hierbei ist jedoch zu priorisieren, dass der Aussteigeabstand 12 eingehalten werden kann. Erfordert dieses Versetzen, dass der durch die Begrenzungslinien 31 gekennzeichnete Parkraum 30 nicht eingehalten wird, so ist, evtl. auch länderspezifisch, zu entscheiden, ob dann der Aussteigeabstand 12 verringert oder die Abweichung zur Begrenzung 31 in Kauf genommen werden kann. In Fig. 3c ist eine Situation gezeigt, in der zwei angrenzend parkenden Fahrzeuge 20, 21 in die Parklücke 30 eingreifen, das heißt über die Begrenzungslinie 31 hinüberragen. In einem derartigen Fall kann das erfindungsgemäße Fahrerassistenzsystem dahingehend ausgestaltet sein, den Aussteigeabstand 12a beidseitig symmetrisch zu verkleinern. Selbstverständlich ist auch möglich, hier eine Abhängigkeit von einer Sitzplatzbelegung zu berücksichtigen.

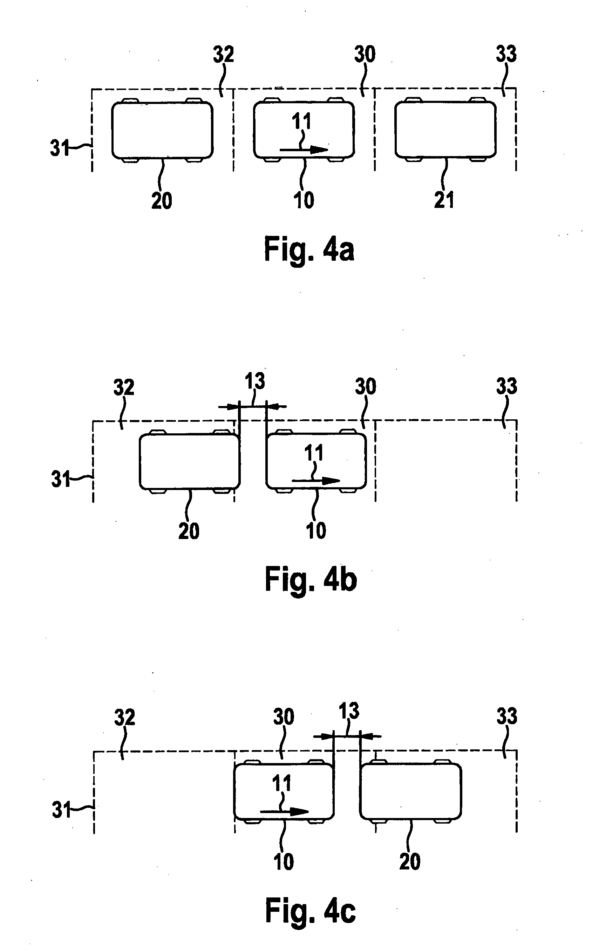

Die Fig. 4a bis 4c zeigen ein Fahrzeug 10 mit einem erfindungsgemäßen Fahrerassistenzsystem in Situationen beim Parken in Längsparklücken.

In Fig. 4a ist der Idealzustand bei parkenden Fahrzeugen 10, 20, 21 in drei Parklücken 30, 32, 33 gezeigt. Alle Fahrzeuge 10, 20, 21 stehen mittig in den Parklücken 30, 32, 33 und parallel bzw. orthogonal zu den Begrenzungslinien 31.

In Fig. 4b ist eine Situation gezeigt, in der das Fahrzeug 20 in der Parklücke 32 zu weit rechts eingeparkt ist, das heißt bereits über die Begrenzungslinie 31 zwischen den Parklücke 30 und 32 in die Parklücke 30 hineinragt. Das Fahrzeug 10, das mit einem erfindungsgemäßen Fahrerassistenzsystem ausgestattet ist, wird primär eine Zielposition festlegen, die sich mittig an den Begrenzungslinien 31 orientiert. Um den Rangierabstand 13 zu dem begrenzenden Fahrzeug 20 einzuhalten, wird diese mittige Position nach rechts versetzt.

Fig. 4c zeigt ein sehr ähnliches Bild, nur dass in dieser Abbildung das nächste Fahrzeug 20 vor dem Fahrzeug 10 steht. Ein weiterer Unterschied liegt in diesem Fall darin, dass das andere Fahrzeug 20 noch deutlicher in die Parklücke 30 hineinragt. Auch in diesem Fall kann länderspezifisch festgesetzt werden, ob der Rangierabstand verringert wird oder die Abweichung zur Begrenzung in Kauf genommen werden kann. In dem gezeigten Fall wird die Abweichung zur Begrenzung 31 in Kauf genommen. Das Fahrzeug 10 wird somit aus der Mitte der Parklücke 30 versetzt, dass die Begrenzung 30 bereits durch das Fahrzeug 10 überdeckt wird.

Die voranstehend genannten Ausführungsformen beschreiben die vorliegende Erfindung im Rahmen von Beispielen. Selbstverständlich können Merkmale zu den einzelnen Ausführungsformen, sofern technisch sinnvoll, frei miteinander kombiniert werden, ohne den Rahmen der vorliegenden Erfindung zu verlassen.

## Patentansprüche

1. Verfahren zum Festlegen einer Zielposition eines Fahrzeuges (10) in einer Parklücke (30), mit folgenden Schritte:
a) Bestimmung von zweidimensionalen Umgebungsparametern der Parklücke (30),
b) Bestimmung von dreidimensionalen Umgebungsparametern der Parklücke (30),
c) Erstellung einer Umweltkarte basierend auf den in den Schritten a) und b) ermittelten Umgebungsparametern der Parklücke (30),
d) Berechnung einer vorläufigen Zielposition des Fahrzeuges (10) in der Parklücke (30) basierend auf den zweidimensionalen Umgebungsparametern,
**gekennzeichnet durch** den folgenden Schritt:
e) Korrektur der vorläufigen Zielposition des Fahrzeuges (10) in der Parklücke (30) basierend auf den dreidimensionalen Umgebungsparametern.

2. Verfahren nach Anspruch 1, **dadurch gekennzeichnet, dass** in Schritt e) des Verfahrens zumindest eine Abstandsinformation berücksichtigt wird.

3. Verfahren nach Anspruch 2, **dadurch gekennzeichnet, dass** als zumindest eine Abstandsinformation ein Aussteigeabstand (12) und/oder ein Rangierabstand (13) berücksichtigt werden.

4. Verfahren nach wenigstens einem der Ansprüche 1 bis 3, **dadurch gekennzeichnet, dass** zur Bestimmung der zweidimensionalen Umgebungsparameter und/oder der Bestimmung der dreidimensionalen Umgebungsparameter Videosensoren und/oder Ultraschallsensoren verwendet werden.

5. Verfahren nach wenigstens einem der Ansprüche 1 bis 4, **dadurch gekennzeichnet, dass** in den Schritten d) und e) Vorschriften, insbesondere länderspezifische Vorschriften, berücksichtigt werden.

6. Verfahren nach wenigstens einem der Ansprüche 1 bis 5, **dadurch gekennzeichnet, dass** die Schritte a) und b) und/oder die Schritte d) und e) kombiniert ausgeführt werden.

7. Verfahren nach wenigstens einem der Ansprüche 1 bis 6, **dadurch gekennzeichnet, dass** durch das Verfahren eine Zielposition des Fahrzeuges (10) in einer Längsparklücke (30) und/oder einer Querparklücke (30) festgelegt wird.

8. Fahrerassistenzsystem zum Festlegen einer Zielposition eines Fahrzeuges (10) in einer Parklücke (30), aufweisend eine Sensoranordnung und eine Auswertevorrichtung, wobei die Sensoranordnung zweidimensionale und dreidimensionale Umgebungsparameter der Parklücke (30) ermittelt und die Auswerteeinrichtung eine Umweltkarte basierend auf den ermittelten zweidimensionalen und dreidimensionalen Umgebungsparameter erstellt, wobei die Auswertevorrichtung basierend auf den zweidimensionalen Umgebungsparametern eine vorläufige Zielposition berechnet, **dadurch gekennzeichnet, dass** die Auswertevorrichtung die vorläufige Zielposition basierend auf den dreidimensionalen Umgebungsparametern korrigiert.

9. Fahrerassistenzsystem nach Anspruch 8, **dadurch gekennzeichnet, dass** die Sensoranordnung Videosensoren und/oder Ultraschallsensoren umfasst.

10. Fahrerassistenzsystem nach wenigstens einem der Ansprüche 8 oder 9, **dadurch gekennzeichnet, dass** das Fahrerassistenzsystem mit der Fahrzeugelektronik verbunden ist und/oder Daten mit der Fahrzeugelektronik austauscht.

11. Fahrerassistenzsystem nach wenigstens einem der Ansprüche 8 bis 10, **dadurch gekennzeichnet, dass** das Fahrerassistenzsystem zur Ausführung eines Verfahrens nach wenigstens einem der Ansprüche 1 bis 7 ausgestaltet ist. wobei

## Claims

1. Method for identifying a target position of a vehicle (10) in a parking space (30), having the following steps:
a) determining two-dimensional environment parameters of the parking space (30),
b) determining three-dimensional environment parameters of the parking space (30),
c) creating an environment map based on the environment parameters, determined in steps a) and b), of the parking space (30),
d) calculating a preliminary target position of the vehicle (10) in the parking space (30) based on the two-dimensional environment parameters,
**characterized by** the following step:
e) correcting the preliminary target position of the vehicle (10) in the parking space (30) based on the three-dimensional environment parameters.

2. Method according to Claim 1, **characterized in that** at least one distance information item is taken into account in step e) of the method.

3. Method according to Claim 2, **characterized in that** an exiting distance item (12) and/or a manoeuvring distance item (13) are/is taken into account as at least one distance information item.

4. Method according to at least one of Claims 1 to 3, **characterized in that** video sensors and/or ultrasound sensors are used to determine the two-dimensional environment parameters and/or to determine the three-dimensional environment parameters.

5. Method according to at least one of Claims 1 to 4, **characterized in that** regulations, in particular country-specific regulations, are taken into account in steps d) and e).

6. Method according to at least one of Claims 1 to 5, **characterized in that** steps a) and b) and/or steps d) and e) are executed in combination.

7. Method according to at least one of Claims 1 to 6, **characterized in that** a target position of the vehicle (10) in a longitudinal parking space (30) and/or a transverse parking space (30) is identified by the method.

8. Driver assistance system for identifying a target position of a vehicle (10) in a parking space (30), comprising a sensor arrangement and an evaluation device, the sensor arrangement determining two-dimensional and three-dimensional environment parameters of the parking space (30), and the evaluation device creating an environment map based on the determined two-dimensional and three-dimensional environment parameters, the evaluation device calculating a preliminary target position based on the two-dimensional environment parameters, **characterized in that** the evaluation device corrects the preliminary target position based on the three-dimensional environment parameters.

9. Driver assistance system according to Claim 8, **characterized in that** the sensor arrangement comprises video sensors and/or ultrasound sensors.

10. Driver assistance system according to at least one of Claims 8 and 9, **characterized in that** the driver assistance system is connected to the vehicle electronics and/or exchanges data with the vehicle electronics.

11. Driver assistance system according to at least one of Claims 8 to 10, **characterized in that** the driver assistance system is configured to execute a method according to at least one of Claims 1 to 7.

## Revendications

1. Procédé de détermination d'une position cible d'un véhicule (10) dans un espace de stationnement (30), avec les étapes suivantes :
a) détermination de paramètres environnementaux bidimensionnels de l'espace de stationnement (30) ;
b) détermination de paramètres environnementaux tridimensionnels de l'espace de stationnement (30) ;
c) réalisation d'une carte environnementale sur la base des paramètres environnementaux de l'espace de stationnement (30) déterminés aux étapes a) et b) ;
d) calcul d'une position cible provisoire du véhicule (10) dans l'espace de stationnement (30) sur la base des paramètres environnementaux bidimensionnels ; **caractérisé par** l'étape suivante :
e) correction de la position cible provisoire du véhicule (10) dans l'espace de stationnement (30) sur la base des paramètres environnementaux tridimensionnels.

2. Procédé selon la revendication 1, **caractérisé en ce qu'**au moins une information de distance est prise en compte à l'étape e) du procédé.

3. Procédé selon la revendication 2, **caractérisé en ce que** l'au moins une information de distance prise en compte est une distance (12) nécessaire pour sortir du véhicule et/ou une distance (13) nécessaire pour stationner le véhicule.

4. Procédé selon au moins l'une quelconque des revendications 1 à 3, **caractérisé en ce que** pour déterminer les paramètres environnementaux bidimensionnels et/ou pour déterminer les paramètres environnementaux tridimensionnels, on utilise des capteurs vidéo et/ou des capteurs à ultrasons.

5. Procédé selon au moins l'une quelconque des revendications 1 à 4, **caractérisé en ce que** l'on tient compte des directives, notamment des directives spécifiques à chaque pays lors des étapes d) et e).

6. Procédé selon au moins l'une quelconque des revendications 1 à 5, **caractérisé en ce que** les étapes a) et b) et/ou les étapes d) et e) sont réalisées de façon combinée.

7. Procédé selon au moins l'une quelconque des revendications 1 à 6, **caractérisé en ce que** le procédé permet de déterminer une position cible du véhicule (10) dans un espace de stationnement (30) longitudinal et/ou un espace de stationnement (30) transversal.

8. Système d'aide à la conduite servant à la détermination d'une position cible d'un véhicule (10) dans un espace de stationnement (30), comportant un agencement de capteur et un dispositif d'analyse, l'agencement de capteur bidimensionnel et les paramètres environnementaux tridimensionnels de l'espace de stationnement (30) étant calculés et le dispositif d'analyse établissant une carte environnementale sur la base des paramètres environnementaux bidimensionnels et tridimensionnels calculés, le dispositif d'analyse calculant sur la base des paramètres environnementaux bidimensionnels une position cible provisoire, **caractérisé en ce que** le dispositif d'analyse corrige la position cible provisoire sur la base des paramètres environnementaux tridimensionnels.

9. Système d'aide à la conduite selon la revendication 8, **caractérisé en ce que** l'agencement de capteur comprend des capteurs vidéo et/ou des capteurs à ultrasons.

10. Système d'aide à la conduite selon au moins l'une quelconque des revendications 8 ou 9, **caractérisé en ce que** le système d'aide à la conduite est relié au système électronique du véhicule et/ou échange des données avec le système électronique du véhicule.

11. Système d'aide à la conduite selon au moins l'une quelconque des revendications 8 à 10, **caractérisé en ce que** le système d'aide à la conduite est configuré pour mettre en oeuvre le procédé selon au moins l'une quelconque des revendications 1 à 7.
